# EUROPEAN PATENT SPECIFICATION

(11) **EP 3 942 938 B1**
(45) Date of publication and mention of the grant of the patent: **23.04.2025**
(21) Application number: 21184997.1
(22) Date of filing: 12.07.2021
(51) Int. Cl.: A23K 10/10, A23K 50/10, A23N 17/00, G16C 60/00

(54) **METHOD AND SYSTEM FOR PREPARING A FEED RATION BASED ON DEGREE OF MACERATION**
VERFAHREN UND SYSTEM ZUR HERSTELLUNG EINER FUTTERRATION AUF BASIS DES MAZERATIONSGRADES
PROCÉDÉ ET SYSTÈME DE PRÉPARATION DE RATION ALIMENTAIRE BASÉS SUR LE DEGRÉ DE MACÉRATION

(30) Priority: 21.07.2020 US 202016934546
(43) Date of publication of application: 26.01.2022
(73) Proprietor: Deere & Company, Moline, IL 61265 (US)
(72) Inventor: Kraus, Timothy J., 68163 Mannheim (DE)
(74) Representative: Stein, Stefan

(56) References cited:
- WO-A1-2015/011476
- WO-A1-2019/243615
- WO-A1-2020/050958
- CA-A- 1 233 544
- GB-A- 939 629
- US-A- 4 333 956
- US-A- 5 036 652
- US-A- 5 152 127
- US-A1- 2008 145 476
- US-A1- 2009 092 715
- US-A1- 2016 309 656
- US-A1- 2018 164 769
- BRODERICK G A ET AL: "Effect of Feeding Macerated Alfalfa Silage on Nutrient Digestibility and Milk Yield in Lactating Dairy Cows", JOURNAL OF DAIRY SCIENCE, AMERICAN DAIRY SCIENCE ASSOCIATION, US, vol. 82, no. 11, 1 November 1999 (1999-11-01), pages 2472 - 2485, XP026993174, ISSN: 0022-0302, [retrieved on 19991101]
- SERRANO-PONCE J G ET AL: "Influence of mechanical maceration on wheat straw on characteristics of digestion in growing finishing diets for feedlot cattle", LIVESTOCK SCIENCE, ELSEVIER, AMSTERDAM, NL, vol. 142, no. 1, 19 July 2011 (2011-07-19), pages 175 - 180, XP028104852, ISSN: 1871-1413, [retrieved on 20110726], DOI: 10.1016/J.LIVSCI.2011.07.008

## Description

### TECHNICAL FIELD

The disclosure generally relates to a feed ration system and a method of preparing a feed ration for an animal with the feed ration system.

### BACKGROUND

Forages, such as but not limited to, grasses, legumes, maize, crop residues, etc., are commonly harvested and fed to ruminant animals. The forage materials are often combined with other feed materials following a ration formulation to define a feed ration for an animal. Ration formulations are generally based on measured nutritive constituents of the forage material. For example. the nutritive constituents of the forage material may include, but are not limited to, Neutral Detergent Fiber (NDF), Digestible fiber, Acid Detergent Fiber (ADF), Crude Protein (CP), Ash (minerals), etc. It is generally understood by those skilled in the art how much of each nutritive constituent is required, for example, for a cow to produce a given amount of milk.

Research has shown that digestibility of forage materials may be improved by extremely processing the forage material prior to feeding the forage material to the animals. This extreme processing is referred to as maceration. Increased digestibility of the forage materials due to maceration increases the amount of nutrients absorbed by the animal for a given volume of forage. The increase in nutrient absorption results in increased production for the given volume of forage, e.g., increased milt production in dairy cattle. However, the increased digestibility provided by macerating the forage material may render the known ration formulations, which are based on the nutritive values of the forage material prior to being macerated, less accurate. SERRANO-PONCE J G ET AL: "Influence of mechanical maceration on wheat straw on characteristics of digestion in growing finishing diets for feed lot cattle", LIVESTOCK SCIENCE, ELSEVIER teaches that mechanical maceration of wheat straw improves the digestible energy value. US 5 152 127 A discloses a method and apparatus for maceration of forage (e.g. silage) materials. GB 939 629 A discloses a process and apparatus for making a stock feed, comprising macerating a feed crop and adding supplementary food factors. US 2018/164769 A1 discloses an organic waste management method and apparatus comprising a macerator and storage tank and sensors (level, temperature, pressure) located in the storage tank, which sensors are in communication with a controller area network module. WO 2019/243615 A1 discloses a method and apparatus for preparing a silage good, comprising subjecting a harvested good to an analysing process for determining a plurality of parameters (ADF, CP, NDF), determine the ensiling conditions, followed by carrying out the ensilaging. US 2009/092715 A1 discloses a computer-based system for characterizing the nutritional components of a ruminant feed ration (e.g. NDF).

### SUMMARY

A method of preparing a feed ration for an animal is provided. The method includes determining an initial nutritive value of a forage material, and then macerating the forage material with a mechanical macerator, wherein macerating is a highly intensive mechanical crop conditioning process in which the physical structure of plant stems are broken down and split into numerals pieces while the leaves and upper stem segments are crushed and pureed. An actual amount of maceration of the forage material achieved by the mechanical macerator is then determined with a macerator sensor. A step of correcting the initial nutritive value with a ration controller based on the actual amount of maceration to define a corrected nutritive value of the forage material, wherein the corrected nutritive value of the forage material is indicative of a change in digestibility of the forage material caused by maceration of the forage material. A step of defining a formulation for the feed ration with the ration controller based on the corrected nutritive value of the forage material, wherein the formulation for the feed ration defines a percentage of the forage material forming the feed ration and a percentage of another feed material forming the feed ration.

In an embodiment, applying the correction to the initial nutritive value of the forage material to define the corrected nutritive value of the forage material may include, but is not limited to, multiplying the initial nutritive value of the forage material by the correction to define the corrected nutritive value of the forage material.

In a further embodiment, after the formulation has been defined, the macerated forage material may then be mixed with the another feed material to form the feed ration. The animal may then be fed with the feed ration.

In a further embodiment, the step of determining the initial nutritive value of the forage material may include, but is not limited to, determining at least one of an initial Neutral Detergent Fiber (NDF) value of the forage material, an initial Acid Detergent Fiber (ADF) value of the forage material, an initial Crude Protein (CP) value of the forage material, or an initial Ash content of the forage material.

In a further embodiment, the forage material may include a fermented crop material forming a silage material.

A feed ration system is also provided. The feed ration system includes a mechanical macerator that is operable to macerate the forage material. The feed ration system includes a macerator sensor that is operable to sense data related to an actual amount of maceration of a forage material achieved by the mechanical macerator. A ration controller is coupled to the macerator sensor. The ration controller includes a processor and a memory having a ration algorithm stored thereon. The processor is operable to execute the ration algorithm to receive an input related to an initial nutritive value of the forage material. The ration controller is further operable to receive the data from the macerator sensor related to the actual amount of maceration of the forage material. The ration controller is then operable to define a correction for the initial nutritive value based on the actual amount of maceration, and to apply the correction to the initial nutritive value of the forage material to define a corrected nutritive value of the forage material. The ration controller is then operable to define a formulation for the feed ration based on the corrected nutritive value of the forage material. The formulation for the feed ration defines a forage percentage of the forage material forming the feed ration and a second percentage of another feed material forming the feed ration.

In an embodiment, the processor is operable to execute the ration algorithm to multiply the initial nutritive value of the forage material by the correction to define the corrected nutritive value of the forage material. In a further embodiment, the feed ration system includes a visual output that is operable to display the formulation. The visual output may include, but is not limited to, a monitor, screen, display, touch-screen display, etc.. In a further embodiment, the feed ration system may further include a mixer. The mixer is operable to automatically combine the forage material with the another feed material at the forage percentage and the second percentage respectively, as defined by the formulation.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic view of a feed ration system.
FIG. 2 is a flowchart representing a method of preparing a feed ration for an animal.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

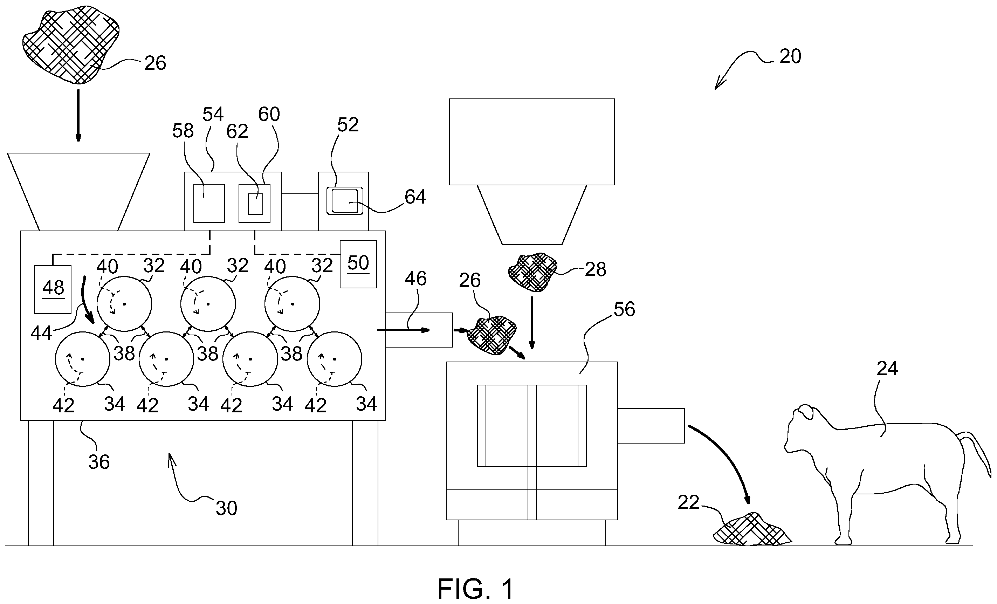

Referring to the Figures, wherein like numerals indicate like parts throughout the several views, a feed ration system is generally shown at 20 in FIG. 1. The feed ration system 20 prepares a feed ration 22 for an animal 24 from a combination of a forage material 26 and other feed materials 28. The feed ration 22 may be fed to a ruminant animal 24, such as but not limited to cattle, sheep, goats, buffalo, deer, etc.

The forage material 26 may include, but is not limited to, a dried green foliage crop or a fermented forage. The dried green foliage crop may include, but is not limited to, grasses, alfalfa, maize, sorghum, or other cereal plants that are dried to a pre-defined level suitable for long term storage. As known to those skilled in the art, the fermented forage is often referred to as silage or a silage material. As understood by those skilled in the art, "silage" is a type of fodder or forage material 26 made from green foliage crops that have been preserved by acidification. The acidification is achieved through a fermentation process. The green foliage crops used to make silage may include, but are not limited to, grasses, alfalfa, maize, sorghum, or other cereal plants.

As noted above, the forage material 26 is combined with the other feed materials 28 to form the feed ration 22. The other feed materials 28 may include, but are not limited to, protein supplements such as soybean meal, and cotton seed, energy supplements such as dry corn, effective fiber supplements such as dry alfalfa hay or grass hay crops, and other minerals and micro nutrients. The forage material 26 and the other feed materials 28 are combined as prescribed by a ration formulation. The ration formulation describes a forage percentage of the feed ration 22 defined by the forage material 26, and a second percentage of the feed ration 22 defined by the other feed materials 28. If the other feed materials 28 include multiple different feed materials, then the ration formulation may include a specific percentage for each of the different feed materials. It should be appreciated that the forage percentage and the second percentage may be defined by unit weight, by unit volume, by unit mass, or in some other manner.

The feed ration system 20 includes a mechanical macerator 30 that is operable to macerate the forage material 26. As understood by those skilled in the art, "macerating" or "maceration" is a highly intensive mechanical crop conditioning process in which the physical structure of plant stems are broken down and split into numerals pieces while the leaves and upper stem segments are crushed and pureed, resulting in significant cell wall rupture and the release of intracellular solubles. For example, the degree of cell wall rupture for macerated forage material 26 may be between 40% and 80%. As is understood by those skilled in the art, maceration is a much more intensive and extreme form of crop processing than the typical crop conditioning that occurs in traditional crop conditioning units commonly disposed on mowers and other crop cutting implements. As such, it should be appreciated that the maceration of the forage material 26 described herein is different and more extensive than, and is not the equivalent of, a typical crop conditioning process that may occur at the time of cutting the crop material that is intended to be dried and made into dry hay or the like. A typical crop conditioning process associated with mower conditioners and other similar crop processing apparatus may provide cell rupture of only 5-10%, and do not provide the level of maceration described herein.

The mechanical macerator 30 may include a device that macerates the forage material 26 through a mechanical process, such as but not limited to, beating, chipping, crushing, bending, cracking, scraping, or shearing the forage material 26. The mechanical macerator 30 may include, for example, one or more macerating plates or rollers that move relative to each other, and pass the forage material 26 therebetween, whereby the forage material 26 is macerated. The mechanical macerator 30 may include a power input, such as but not limited to a rotary power input that drives a gear train, or an electric input that drives an electric motor, a hydraulic input that drives a hydraulic motor etc. The power input in turn drives the macerating plates and/or rollers for macerating the forage material 26. It should be appreciated that the mechanical macerator 30 may include other components not described herein, and that the specific construction, configuration, and operation of the mechanical macerator 30 may vary from the example implementation shown in the Figures and described herein.

Referring to FIG. 1, an example implementation of the mechanical macerator 30 is generally shown. The example implementation of the mechanical macerator 30 includes a first processor roll 32 and a second processor roll 34. In the example implementation shown in FIG. 1 and described herein, the mechanical macerator 30 includes a plurality of first processor rolls 32, and a plurality of second processor rolls 34. However, it should be appreciated that the example implementation of the mechanical macerator 30 may be implemented with only a single first processor roll 32 and a single second processor roll 34.

The first processor roll 32 and a second processor roll 34 are rotatably attached to a frame 36 and are arranged in parallel with each other. The first processor roll 32 and the second processor roll 34 are spaced apart from each other to define a roll gap 38 therebetween. At least one of the first processor roll 32 and the second processor roll 34 is moveable relative to the other of the first processor roll 32 and the second processor roll 34 to change or adjust the roll gap 38 therebetween. The first processor roll 32 and the second processor roll 34 may be attached to and supported by the frame 36 in a suitable manner. Additionally, at least one of the first processor roll 32 and the second processor roll 34 may include an adjustment mechanism attaching it to the frame 36 to enable relative movement therebetween to adjust the roll gap 38. The specific construction and operation of the adjustment mechanism are not pertinent to the teachings of this disclosure, are understood by those skilled in the art, and are therefore not described in detail herein.

Each of the first processor roll 32 and the second processor roll 34 are rotatable about a respective central longitudinal axis. The first processor roll 32 and the second processor roll 34 may be configured to rotate in opposite rotational directions. For example, the first processor roll 32 may be configured to rotate in a counter-clockwise direction 40 as viewed on the page of FIG. 1, whereas the second processor roll 34 may be configured to rotate in a clockwise direction 42 as viewed on the page of FIG. 1. Each of the first processor roll 32 and the second processor roll 34 are operable to rotate at a respective rotational speed. As such, the first processor roll 32 may rotate at a first rotational speed, and the second processor roll 34 may rotate at a second rotational speed that is different from the first rotational speed. The difference between the first rotational speed and the second rotational speed defines a differential roll speed.

The first processor roll 32 and the second processor roll 34 are operable to receive the forage material 26 through an inlet 44 of the roll gap 38, and macerate the forage material 26 as the silage passes through the roll gap 38 with the first processor roll 32 and the second processor roll 34 rotating at their respective rotational speeds. The amount of maceration of the forage material 26 is dependent, at least partially, upon the distance of the roll gap 38 and the differential roll speed between the first processor roll 32 and the second processor roll 34. The forage material 26 is discharged from the roll gap 38 through an outlet 46 of the roll gap 38.

The feed ration system 20 may include a nutrition sensor 48. The nutrition sensor 48 may be positioned adjacent the inlet 44 of the roll gap 38. The nutrition sensor 48 is operable to sense data related to nutritive levels of the forage material 26. The nutritive levels or values of the forage material 26 may include, but are not limited to, a Neutral Detergent Fiber (NDF) value, a digestible fiber value, an Acid Detergent Fiber (ADF) value, a Crude Protein (CP) value, and an Ash or mineral content value. It should be appreciated that the nutrition sensor 48 may sense data related to these or other nutritive values which may then be used to determine or calculate the actual nutritive values. Alternatively, the nutrition sensor 48 may sense the actual nutritive values directly. The nutrition sensor 48 may include any sensor or combination of sensors, test equipment, chemicals, cameras, etc., necessary to sense the data related to the nutritive levels. The specific configuration and operation of the nutrition sensor 48 is dependent upon the specific types of nutritive values sensed, are understood by those skilled in the art, and are therefore not described in detail herein.

The mechanical macerator 30 further includes a macerator sensor 50. The macerator sensor 50 is positioned adjacent to the outlet 46 of the roll gap 38. The macerator sensor 50 is operable to sense data related to an actual amount of maceration achieved by the mechanical macerator 30. The macerator sensor 50 may sense data related to the actual amount of maceration that may then be used to determine or calculate the actual amount of maceration achieved, or may directly sense the actual amount of maceration achieved. The macerator sensor 50 may include, for example, a camera or other similar device that captures and image of the forage material 26 exiting the roll gap 38. The image may then be analyzed by a ration controller 54 to determine the actual amount of maceration of the forage material 26. It should be appreciated that the macerator sensor 50 may be implemented in some other manner not shown or described herein.

The feed ration system 20 may further include an output 52 for communicating a message. The output 52 may include, but is not limited to, a visual output 52 that is operable to display the ration formulation. The visual output 52 may include, but is not limited to, a display screen, a touch-screen display, a monitor, etc. The output 52 may be coupled to and in communication with a ration controller 54, which provides or communicates as signal to the output 52 representing or indicating the ration formulation to a user. It should be appreciated that the output 52 may be configured differently than the visual output 52 described herein.

The feed ration system 20 may further include a mixer 56. The mixer 56 is operable to combine the forage material 26 with the other feed material 28 at the forage percentage and the second percentage defined by the ration formulation respectively. In none implementation, the mixer 56 may be automatically controlled by the ration controller 54. In another implementation, the mixer 56 may be manually controlled and/or operated by a user. The mixer 56 may include any device capable of combining and mixing the macerated forage material 26 with the other feed material 28(s) to form the feed ration 22 at the combined percentages defined by the ration formulation. The specific construction and operation of the mixer 56 are not pertinent to the teachings of this disclosure, are well known to those skilled in the art, and are therefore not described in detail herein.

The ration controller 54 is coupled to and in communication with the macerator sensor 50. If equipped with the nutrition sensor 48, the output 52, and/or the mixer 56, the ration controller 54 may further be coupled to and in communication with the nutrition sensor 48, the output 52, and the mixer 56 respectively. The ration controller 54 may be operable to receive data from the nutrition sensor 48 and the macerator sensor 50. Additionally, the ration controller 54 may be operable to control and/or adjust the mixer 56 and/or the visual display. As described in greater detail below, the ration controller 54 is operable to determine the ration formulation.

The ration controller 54 may alternatively be referred to as a computing device, a computer, a controller, a control module, a module, etc. The ration controller 54 may be operable to receive data from the nutrition sensor 48 and the macerator sensor 50, and control the operation of the feed ration system 20. The ration controller 54 includes a processor 58, a memory 60, and all software, hardware, algorithms, connections, sensors, etc., necessary to manage and control the operation of the feed ration system 20. As such, a method may be embodied as a program or algorithm operable on the ration controller 54. It should be appreciated that the ration controller 54 may include any device capable of analyzing data from various sensors, comparing data, making the necessary decisions required to control the operation of the feed ration system 20 and executing the required tasks necessary to implement the method described herein.

As used herein, "controller" is intended to be used consistent with how the term is used by a person of skill in the art, and refers to a computing component with processing, memory, and communication capabilities, which is utilized to execute instructions (i.e., stored on the memory or received via the communication capabilities) to control or communicate with one or more other components. In certain embodiments, a controller may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The ration controller 54 may be in communication with other components on the feed ration system 20, such as hydraulic components, electrical components, input devices, etc. The ration controller 54 may be electrically connected to these other components by a wiring harness such that messages, commands, and electrical power may be transmitted between the ration controller 54 and the other components. Although the ration controller 54 is referenced in the singular, in alternative embodiments the configuration and functionality described herein can be split across multiple controllers using techniques known to a person of ordinary skill in the art.

The ration controller 54 may be embodied as one or multiple digital computers or host machines each having one or more processors, read only memory (ROM), random access memory (RAM), electrically-programmable read only memory (EPROM), optical drives, magnetic drives, etc., a high-speed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 60 may include any non-transitory/tangible medium which participates in providing data or computer-readable instructions. The memory 60 may be non-volatile or volatile. Non-volatile media may include, for example, optical or magnetic disks and other persistent memory. Example volatile media may include dynamic random access memory (DRAM), which may constitute a main memory. Other examples of embodiments for memory 60 include a floppy, flexible disk, or hard disk, magnetic tape or other magnetic medium, a CD-ROM, DVD, and/or any other optical medium, as well as other possible memory devices such as flash memory.

The ration controller 54 includes the tangible, non-transitory memory 60 on which are recorded computer-executable instructions, including a ration algorithm 62. The processor 58 of the ration controller 54 is configured for executing the ration algorithm 62. The ration algorithm 62 implements a method of preparing the feed ration 22 for the animal 24.

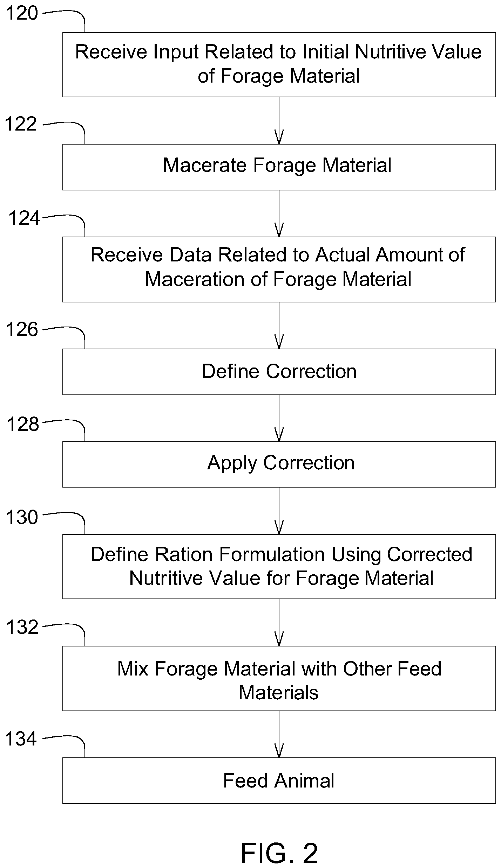

In order to implement the method of preparing the feed ration 22, the ration controller 54 receives an input related to an initial nutritive value of the forage material 26. The step of receiving the input is generally indicated by box 120 in FIG. 2. The initial nutritive value of the forage material 26 may include an age of growth of the forage material 26, which may be calculated or estimated by an operator. Alternatively, if the feed ration system 20 is equipped with the nutrition sensor 48, then the ration controller 54 may receive the input from the nutrition sensor 48, and use the data from the input to determine the initial nutritive value of the forage material 26. Alternatively, if the feed ration system 20 is not equipped with the nutrition sensor 48, then the ration controller 54 may receive the input from a user input device 64, such as a touch-screen display, a keyboard, or some other manner of data entry.

The input related to the nutritive levels or values of the forage material 26 are determined or sense prior to the forage material 26 being macerated. The ration controller 54 may use the data related to the nutritive values of the forage material 26 to calculate or otherwise determine the actual nutritive values of the forage material 26 prior to maceration. The initial nutritive value of the forage material 26 may include, but is not limited to, at least one of an initial Neutral Detergent Fiber (NDF) value of the forage material 26, a digestible fiber vale of the forage material 26, an initial Acid Detergent Fiber (ADF) value of the forage material 26, an initial Crude Protein (CP) value of the forage material 26, or an initial Ash content of the forage material 26.

Once the initial nutritive values of the forage material 26 have been sensed or otherwise determined, the forage material 26 is then macerated with the mechanical macerator 30. The step of macerating the forage material 26 is generally indicated by box 122 in FIG. 2. The ration controller 54 may control the mechanical macerator 30, such as by controlling the roll gap 38 and/or the differential roll speed, to control the amount of maceration of the forage material 26.

After the forage material 26 is macerated, the ration controller 54 receives data from the macerator sensor 50 related to the actual amount of maceration of the forage material 26. The step of receiving data related to the actual amount of maceration is generally indicated by box 124 in FIG. 2. The data from the macerator sensor 50 may be used to calculate or otherwise determine how much the forage material 26 was actually macerated.

As described above, the level or amount of maceration may be determined by capturing an image of the forage material 26 after maceration, and examining the image with artificial intelligence of the ration controller 54 to determine the level or amount of maceration of the forage material 26. Additionally, it should be appreciated that the level or amount of maceration of the forage material 26 may be sensed and/or determined in some other manner, using some other data sensed by the macerator sensor 50, that is not mentioned or described herein.

The degree to which the animal 24 may digest constituents of the forage material 26 is affected by the amount or degree of maceration of the forage material 26. A higher level of maceration may enable the animal 24 to digest a higher percentage of constituent elements of the forage material 26 for a given volume then a lower amount of maceration. As such, the final ration formulation is dependent upon the level or amount of maceration of the forage material 26 that is actually achieved by the mechanical macerator 30.

Ration formulations are generally based on nutritive values of the forage material 26. However, these ration formulations have been developed based on forage material 26 that has not been macerated. For this reason, the known ration formulations do not reflect the amount of nutrients the animal 24 may digest from macerated forage material 26. Accordingly, the ration controller 54 corrects the initial nutritive value based on the actual amount of maceration to define a corrected nutritive value of the forage material 26. The corrected nutritive value of the forage material 26 is indicative of the change in digestibility of the forage material 26 caused by maceration of the forage material 26. The corrected nutritive value of the forage material 26 may then be used to calculate the ration formulation based on known or established feed component portions to productivity relationships.

The ration controller 54 may correct the initial nutritive value based on the actual amount of maceration of the forage material 26 in a suitable manner. For example, in one implementation, the ration controller 54 may define a correction for the initial nutritive value based on the actual amount of maceration. The step of defining the correction is generally indicated by box 126 in FIG. 2. The correction may include, but is not limited to, a multiplication factor, that increases or decreases the initial nutritive value of the forage material 26 based on the affects of maceration, to reflect the amount of nutrient digestion absorbed by the animal 24 after maceration. The correction may depend on the amount of maceration. For example, in one implementation, the correction may increase the initial nutritive value with an increase in the amount of maceration. However, in other implementations or for other constituent components of the forage material 26, the correction may decrease the initial nutritive value with an increase in the amount of maceration.

The ration controller 54 applies the correction to the initial nutritive value of the forage material 26 to define the corrected nutritive value of the forage material 26. The step of applying the correction is generally indicated by box 128 in FIG. 2. The manner in which the correction is applied is dependent upon the type of correction. For example, in one implementation, the correction is a multiplication factor. As such, the correction is applied by multiplying the initial nutritive value of the forage material 26 by the correction to define the corrected nutritive value of the forage material 26. In other embodiments, the correction may include an additive correction. As such, the correction is applied by summing the initial nutritive value with the correction to define the corrected nutritive value of the forage material 26. It should be appreciated that the correction may mathematically alter the value of the initial nutritive value of the forage material 26 in some other manner not specifically described herein, and that the method of applying the correction is dependent upon the manner that the correction alters the initial nutritive value.

After the ration controller 54 has defined or calculated the corrected nutritive value, the ration controller 54 may then calculate or define the ration formulation for the feed ration 22 based on the corrected nutritive value of the forage material 26. The step of defining the ration formulation is generally indicated by box 130 in FIG. 2. As described above, the ration formulation for the feed ration 22 defines a forage percentage of the forage material 26 forming the feed ration 22 and a second percentage of another feed material 28 forming the feed ration 22. The second percentage may include multiple different percentage values for multiple different other feed materials 28. For example, if the other feed material 28 includes a first other feed material 28, a second other feed material 28 and a third other feed material 28, then the ration formulation would include a respective percentage of the feed ration 22 for each of the first other feed material 28, the second other feed material 28, and the third other feed material 28.

It should be appreciated that the forage percentage and the second percentage may be percentages of the feed ration 22 based on, but not limited to, weight, volume, or mass. The ration controller 54 may define the forage percentage and the second percentage, based on known formulations using the corrected nutritive values of the forage material 26. By using the corrected nutritive values of the forage material 26, the formulation reflects the change in digestibility of the forage material 26 caused by macerating the forage material 26.

Once the ration formulation has been defined, the macerated forage material 26 may be mixed with the mixer 56 with the other feed materials 28 to form the feed ration 22 for the animal 24. The step of mixing the feed ration 22 is generally indicated by box 132 in FIG. 2. The ration controller 54 may control the mixer 56 to automatically mix the macerated forage material 26 with the other feed materials 28. However, in other implementations, the ration controller 54 may display the ration formulation on the output 52 for a user, and then the user may manually mix the macerated forage material 26 with the other feed materials 28 to form the feed ration 22. After mixing the macerated forage material 26 with the other feed materials 28, the feed ration 22 may then be fed to the animal 24. The step of feeding the animal 24 is generally indicated by box 134 in FIG. 2.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

The detailed description and the drawings or figures are supportive and descriptive of the disclosure, but the scope of the disclosure is defined solely by the claims.

## Claims

1. A method of preparing a feed ration (22) for an animal (24), the method comprising:
determining an initial nutritive value of a forage material (26);
macerating the forage material (26) with a mechanical macerator (30), wherein macerating is a highly intensive mechanical crop conditioning process in which the physical structure of plant stems are broken down and split into numerals pieces while the leaves and upper stem segments are crushed and pureed;
determining an actual amount of maceration of the forage material (26) achieved by the mechanical macerator (30) with a macerator sensor (50); and
defining a formulation for the feed ration (22) with a ration controller (54) based on the actual amount of maceration of the forage material (26), wherein the formulation for the feed ration (22) defines a percentage of the forage material (26) forming the feed ration (22) and a percentage of another feed material (28) forming the feed ration (22); wherein defining the formulation for the feed ration (22) based on the actual amount of maceration includes defining a correction with the ration controller (54) for the initial nutritive value based on the actual amount of maceration, and applying the correction with the ration controller (54) to the initial nutritive value of the forage material (26) to define a corrected nutritive value of the forage material (26).

2. The method according to claim 1, wherein applying the correction to the initial nutritive value of the forage material (26) to define the corrected nutritive value of the forage material (26) includes multiplying the initial nutritive value of the forage material (26) by the correction to define the corrected nutritive value of the forage material (26).

3. The method according to at least one of the claims 1 to 2, further comprising mixing the forage material (26) after maceration with the another feed material (28) to form the feed ration (22).

4. The method according to at least one of the claims 1 to 3, further comprising feeding the feed ration (22) to the animal (24).

5. The method according to at least one of the claims 1 to 4,
wherein determining the initial nutritive value of the forage material (26) includes determining at least one of an initial Neutral Detergent Fiber (NDF) value of the forage material (26), a digestible fiber value of the forage material (26), an initial Acid Detergent Fiber (ADF) value of the forage material (26), an initial Crude Protein (CP) value of the forage material (26), or an initial Ash content of the forage material (26).

6. The method according to at least one of the claims 1 to 5,
wherein the forage material (26) is a fermented crop material forming a silage material.

7. The method according to at least one of the claims 1 to 6,
wherein determining the initial nutritive value of the forage material (26) includes determining an age of growth of the forage material (26).

8. A feed ration system comprising:
a mechanical macerator (30) operable to macerate the forage material (26), wherein macerating is a highly intensive mechanical crop conditioning process in which the physical structure of plant stems are broken down and split into numerals pieces while the leaves and upper stem segments are crushed and pureed;
a macerator sensor (50) operable to sense data related to an actual amount of maceration of a forage material (26) achieved by the mechanical macerator (30);
a ration controller (54) coupled to the macerator sensor (50), the ration controller (54) including a processor and a memory having a ration algorithm stored thereon, wherein the processor is operable to execute the ration algorithm to:
receive an input related to an initial nutritive value of the forage material (26);
receive the data from the macerator sensor (50) related to the actual amount of maceration of the forage material (26);
define a correction for the initial nutritive value based on the actual amount of maceration;
apply the correction to the initial nutritive value of the forage material (26) to define a corrected nutritive value of the forage material (26); and
define a formulation for the feed ration (22) based on the corrected nutritive value of the forage material (26), wherein the formulation for the feed ration (22) defines a forage percentage of the forage material (26) forming the feed ration (22) and a second percentage of another feed material (28) forming the feed ration (22).

9. The feed ration system set forth in claim 8, wherein the processor is operable to execute the ration algorithm to multiply the initial nutritive value of the forage material (26) by the correction to define the corrected nutritive value of the forage material (26).

10. The feed ration system set forth in claim 8 or 9, further comprising a mixer (56) operable to automatically combine the forage material (26) with the another feed material (28) at the forage percentage and the second percentage defined by the formulation.

## Patentansprüche

1. Verfahren zum Zubereiten einer Futterration (22) für ein Tier (24), wobei das Verfahren Folgendes umfasst:
Bestimmen eines anfänglichen Nährwerts eines Futterpflanzenmaterials (26);
Mazerieren des Futterpflanzenmaterials (26) mit einem mechanischen Mazerator (30), wobei das Mazerieren ein hochintensiver mechanischer Erntegutaufbereitungsprozess ist, bei dem die physikalische Struktur von Pflanzenstängeln aufgebrochen und in eine Vielzahl von Stücken aufgeteilt wird, während die Blätter und oberen Stängelsegmente zerquetscht und püriert werden;
Bestimmen einer tatsächlichen Mazerationsmenge des Futterpflanzenmaterials (26), die durch den mechanischen Mazerator (30) erreicht wurde, mit einem Mazeratorsensor (50); und
Definieren einer Formulierung für die Futterration (22) mit einer Rationssteuervorrichtung (54) basierend auf der tatsächlichen Mazerationsmenge des Futterpflanzenmaterials (26), wobei die Formulierung für die Futterration (22) einen Prozentsatz des Futterpflanzenmaterials (26), der die Futterration (22) bildet, und einen Prozentsatz eines anderen Futtermittelmaterials (28), der die Futterration (22) bildet, definiert; wobei das Definieren der Formulierung für die Futterration (22) basierend auf der tatsächlichen Mazerationsmenge das Definieren einer Korrektur mit der Rationssteuervorrichtung (54) für den anfänglichen Nährwert basierend auf der tatsächlichen Mazerationsmenge und das Anwenden der Korrektur mit der Rationssteuervorrichtung (54) auf den anfänglichen Nährwert des Futterpflanzenmaterials (26) umfasst, um einen korrigierten Nährwert des Futterpflanzenmaterials (26) zu definieren.

2. Verfahren nach Anspruch 1, wobei das Anwenden der Korrektur auf den anfänglichen Nährwert des Futterpflanzenmaterials (26), um den korrigierten Nährwert des Futterpflanzenmaterials (26) zu definieren, das Multiplizieren des anfänglichen Nährwerts des Futterpflanzenmaterials (26) mit der Korrektur beinhaltet, um den korrigierten Nährwert des Futterpflanzenmaterials (26) zu definieren.

3. Verfahren nach mindestens einem der Ansprüche 1 bis 2, ferner umfassend das Mischen des Futterpflanzenmaterials (26) nach der Mazeration mit dem anderen Futtermittelmaterial (28), um die Futterration (22) zu bilden.

4. Verfahren nach mindestens einem der Ansprüche 1 bis 3, ferner umfassend das Verfüttern der Futterration (22) an das Tier (24).

5. Verfahren nach mindestens einem der Ansprüche 1 bis 4, wobei das Bestimmen des anfänglichen Nährwerts des Futterpflanzenmaterials (26) das Bestimmen mindestens eines beinhaltet von einem anfänglichen neutralen Detergensfaser(NDF)-Wert des Futterpflanzenmaterials (26), einem verdaulichen Faserwert des Futterpflanzenmaterials (26), einem anfänglichen Säuredetergensfaser(ADF)-Wert des Futterpflanzenmaterials (26), einem anfänglichen Rohprotein(CP)-Wert des Futterpflanzenmaterials (26) oder einem anfänglichen Aschegehalt des Futterpflanzenmaterials (26).

6. Verfahren nach mindestens einem der Ansprüche 1 bis 5, wobei das Futterpflanzenmaterial (26) ein fermentiertes Erntegutmaterial ist, das ein Silagematerial bildet.

7. Verfahren nach mindestens einem der Ansprüche 1 bis 6, wobei das Bestimmen des anfänglichen Nährwerts des Futterpflanzenmaterials (26) das Bestimmen eines Wachstumsalters des Futterpflanzenmaterials (26) beinhaltet.

8. Futterrationssystem, umfassend:
einen mechanischen Mazerator (30), der betriebsfähig ist, das Futterpflanzenmaterial (26) zu mazerieren, wobei das Mazerieren ein hochintensiver mechanischer Erntegutaufbereitungsprozess ist, bei dem die physikalische Struktur von Pflanzenstängeln aufgebrochen und in eine Vielzahl von Stücken aufgeteilt wird, während die Blätter und oberen Stängelsegmente zerquetscht und püriert werden;
einen Mazeratorsensor (50), der betriebsfähig ist, Daten in Bezug auf eine tatsächliche Mazerationsmenge eines Futterpflanzenmaterials (26) zu erfassen, die durch den mechanischen Mazerator (30) erreicht wurde;
eine Rationssteuervorrichtung (54), die mit dem Mazeratorsensor (50) gekoppelt ist, wobei die Rationssteuervorrichtung (54) einen Prozessor und einen Speicher mit einem darauf gespeicherten Rationsalgorithmus beinhaltet, wobei der Prozessor betriebsfähig ist, den Rationsalgorithmus auszuführen, um:
eine Eingabe in Bezug auf einen anfänglichen Nährwert des Futterpflanzenmaterials (26) zu empfangen;
die Daten aus dem Mazeratorsensor (50) in Bezug auf die tatsächliche Mazerationsmenge des Futterpflanzenmaterials (26) zu empfangen;
eine Korrektur für den anfänglichen Nährwert basierend auf der tatsächlichen Mazerationsmenge zu definieren;
die Korrektur auf den anfänglichen Nährwert des Futterpflanzenmaterials (26) anzuwenden, um einen korrigierten Nährwert des Futterpflanzenmaterials (26) zu definieren; und
eine Formulierung für die Futterration (22) basierend auf dem korrigierten Nährwert des Futterpflanzenmaterials (26) zu definieren, wobei die Formulierung für die Futterration (22) einen Futterpflanzenprozentsatz des Futterpflanzenmaterials (26), der die Futterration (22) bildet, und einen zweiten Prozentsatz eines anderen Futtermittelmaterials (28), der die Futterration (22) bildet, definiert.

9. Futterrationssystem nach Anspruch 8, wobei der Prozessor betriebsfähig ist, den Rationsalgorithmus auszuführen, um den anfänglichen Nährwert des Futterpflanzenmaterials (26) mit der Korrektur zu multiplizieren, um den korrigierten Nährwert des Futterpflanzenmaterials (26) zu definieren.

10. Futterrationssystem nach Anspruch 8 oder 9, ferner umfassend einen Mischer (56), der betriebsfähig ist, das Futterpflanzenmaterial (26) automatisch mit dem anderen Futtermittelmaterial (28) in dem durch die Formulierung definierten Futterpflanzenprozentsatz und dem zweiten Prozentsatz zu kombinieren.

## Revendications

1. Procédé de préparation d'une ration alimentaire (22) pour un animal (24), le procédé comprenant :
la détermination d'une valeur nutritionnelle initiale d'une matière fourragère (26) ;
la macération de la matière fourragère (26) au moyen d'un macérateur mécanique (30), la macération consistant en un processus de conditionnement mécanique de récolte hautement intensif dans lequel les structures physiques des tiges de plantes sont désagrégées et séparées en de nombreux morceaux tandis que les feuilles et les segments de tige supérieurs sont broyés et réduits en purée ;
la détermination d'une quantité effective de macération de la matière fourragère (26) obtenue par le macérateur mécanique (30) au moyen d'un capteur (50) de macérateur ; et
la définition d'une formulation pour la ration alimentaire (22) au moyen d'un contrôleur de ration (54) sur la base de la quantité effective de macération de la matière fourragère (26), la formulation pour la ration alimentaire (22) définissant un pourcentage de la matière fourragère (26) formant la ration alimentaire (22) et un pourcentage d'une autre matière alimentaire (28) formant la ration alimentaire (22) ; la définition de la formulation pour la ration alimentaire (22) sur la base de la quantité effective de macération comportant la définition d'une correction au moyen du contrôleur de ration (54) pour la valeur nutritionnelle initiale sur la base de la quantité effective de macération, et l'application de la correction au moyen du contrôleur de ration (54) à la valeur nutritionnelle initiale de la matière fourragère (26) pour définir une valeur nutritionnelle corrigée de la matière fourragère (26).

2. Procédé selon la revendication 1, dans lequel l'application de la correction à la valeur nutritionnelle initiale de la matière fourragère (26) pour définir la valeur nutritionnelle corrigée de la matière fourragère (26) comporte la multiplication de la valeur nutritionnelle initiale de la matière fourragère (26) par la correction pour définir la valeur nutritionnelle corrigée de la matière fourragère (26).

3. Procédé selon au moins une des revendications 1 à 2, comprenant en outre le mélange de la matière fourragère (26) après macération avec l'autre matière alimentaire (28) pour former la ration alimentaire (22).

4. Procédé selon au moins une des revendications 1 à 3, comprenant en outre l'administration de la ration alimentaire (22) à l'animal (24).

5. Procédé selon au moins une des revendications 1 à 4, dans lequel la détermination de la valeur nutritionnelle initiale de la matière fourragère (26) comporte la détermination d'une valeur initiale de fibre au détergent neutre (NDF) de la matière fourragère (26) et/ou d'une valeur de fibre digestible de la matière fourragère (26) et/ou d'une valeur initiale de fibre au détergent acide (ADF) de la matière fourragère (26) et/ou d'une valeur initiale de protéine brute (CP) de la matière fourragère (26) et/ou d'une teneur initiale en cendres de la matière fourragère (26).

6. Procédé selon au moins une des revendications 1 à 5, dans lequel la matière fourragère (26) consiste en une matière de récolte fermentée formant une matière d'ensilage.

7. Procédé selon au moins une des revendications 1 à 6, dans lequel la détermination de la valeur nutritionnelle initiale de la matière fourragère (26) comporte la détermination d'un âge de croissance de la matière fourragère (26).

8. Système de ration alimentaire, comprenant :
un macérateur mécanique (30) utilisable pour faire macérer la matière fourragère (26), la macération consistant en un processus de conditionnement mécanique de récolte hautement intensif dans lequel les structures physiques des tiges de plantes sont désagrégées et séparées en de nombreux morceaux tandis que les feuilles et les segments de tige supérieurs sont broyés et réduits en purée ;
un capteur (50) de macérateur utilisable pour capter des données liées à une quantité effective de macération d'une matière fourragère (26) obtenue par le macérateur mécanique (30) ;
un contrôleur de ration (54) couplé au capteur (50) de macérateur, le contrôleur de ration (54) comportant un processeur et une mémoire sur laquelle est stocké un algorithme de ration, le processeur étant utilisable pour exécuter l'algorithme de ration pour :
recevoir une entrée liée à une valeur nutritionnelle initiale de la matière fourragère (26) ;
recevoir depuis le capteur (50) de macérateur les données liées à la quantité effective de macération de la matière fourragère (26) ;
définir une correction pour la valeur nutritionnelle initiale sur la base de la quantité effective de macération ;
appliquer la correction à la valeur nutritionnelle initiale de la matière fourragère (26) pour définir une valeur nutritionnelle corrigée de la matière fourragère (26) ; et
définir une formulation pour la ration alimentaire (22) sur la base de la valeur nutritionnelle corrigée de la matière fourragère (26), la formulation pour la ration alimentaire (22) définissant un pourcentage de fourrage de la matière fourragère (26) formant la ration alimentaire (22) et un deuxième pourcentage d'une autre matière alimentaire (28) formant la ration alimentaire (22).

9. Système de ration alimentaire selon la revendication 8, dans lequel le processeur est utilisable pour exécuter l'algorithme de ration pour multiplier la valeur nutritionnelle initiale de la matière fourragère (26) par la correction pour définir la valeur nutritionnelle corrigée de la matière fourragère (26).

10. Système de ration alimentaire selon la revendication 8 ou 9, comprenant en outre un mélangeur (56) utilisable pour combiner automatiquement la matière fourragère (26) avec l'autre matière alimentaire (28) au pourcentage de fourrage de la matière fourragère et au deuxième pourcentage définis par la formulation.
